# EUROPEAN PATENT APPLICATION

(11) **EP 4 440 000 A1**
(43) Date of publication of application: **02.10.2024**
(21) Application number: 23165845.1
(22) Date of filing: 31.03.2023
(51) Int. Cl.: H04B 7/185

(54) **COMMUNICATION SYSTEM FOR SECURE COMMUNICATION BETWEEN AIRCRAFT**

(71) Applicant: Airbus S.A.S., 31700 Blagnac (FR)
(72) Inventor: Duhovnikov, Svetoslav, Taufkirchen (DE); Geyer, Fabien, Taufkirchen (DE); Multerer, Thomas, Taufkirchen (DE)
(74) Representative: OTN Airbus SAS

(57) **Abstract**

A communication system for secure communication between a flying aircraft is proposed, wherein a communication infrastructure is provided in both aircraft as well as a computer program establishing a communication link between the aircraft. The first aircraft may be provided with a first communication node and a first processing unit and the second aircraft may be provided with a second communication node and a second processing unit. The communication system comprises a computer program product which is configured, when executed on the processing units of the aircraft, to cause the communication system to establish a communication link between the flying aircraft. For security reasons, a distance between the flying aircraft should be in a short range.

## Description

### FIELD OF THE INVENTION

The present invention relates to communication between aircraft and, in particular, to a secure communication between flying aircraft, which communication allows for a provision of flight operation commands from one aircraft to another aircraft.

### BACKGROUND OF THE INVENTION

Current aircraft safety communication systems do not allow access and information flow to the Aircraft Control Domain (ACD) due to security constraints - this is the highest trust domain and interactions are possible only with the aircraft pilots. In addition, use-cases such as remote piloted or assisted aircraft require end-to-end communication latencies that cannot be provided by the communication systems installed today on aircraft.

A communication system of such aircraft should augment autonomous systems and both contribute toward achieving a desired design assurance level for specific aircraft functions and reduce the on-board autonomous system complexity and redundancy. It should also be possible to retrofit the communication system to existing aircraft to enhance the safety of flight.

Moreover, such communication systems may be used in case of emergency scenarios, such as pilot incapacitation, to enable the handover of aircraft control to authorize personnel and assist the safe completion of the flight mission. Currently, such a scenario cannot be realized due to security constraints.

The proposed communication system aims at solving both problems described above, i.e. provide a trustful system that can communicate with very low latencies with the aircraft.

The proposed communication system is a "short range secure communication system for aircraft" that can support aircraft flight operations in, e.g., emergency scenarios. The communication system leverages existing technology bricks such as, e.g., UWB and/or 5G or future cellular network standards. It supports both human to machine (h2m) and machine to machine (m2m) communications. The advantage of the proposed system is that the safety of flight can be increased, aviation accidents can be avoided and trust in air travel can be kept at maximum level.

### SUMMARY OF THE INVENTION

The mentioned objects are solved by the subject-matter of the independent claims. Further embodiments are incorporated in the dependent claims. It should be noted that the following described aspects of the invention apply for communication systems as well as for methods establishing a communication between aircraft.

An air-to-air communication system for short range secure communication between aircraft is proposed which allows for a secure transfer of data to the aircraft control domain systems, for example autopilot, by authorized personnel or remote pilot.

In general, a communication system for secure communication between a first flying aircraft and a second flying aircraft comprises communication infrastructure in both aircraft as well as a computer program establishing a communication link between the aircraft. The first aircraft may be provided with a first communication node and a first processing unit and the second aircraft may be provided with a second communication node and a second processing unit. The communication infrastructure of both aircraft may be seen as forming an overall communication system in accordance with the disclosure herein. The communication system comprises a computer program product including sets of instructions, wherein the computer program product is configured, when executed on the processing units of the aircraft, to cause the communication system to establish a communication link between the flying aircraft.

For security reasons, a distance between the flying aircraft should be less than 1000 meters. It will be understood that the distance may be less than 500 meters or less than 200 meters. In particular, the distance between the flying aircraft may even be less than 100 meters. At such a distance, the pilots of the aircraft may see the other aircraft and, in particular, it may be ensured that no further aircraft is within the range of the communication system.

According to an embodiment, the computer program product may be configured to cause the communication system to determine the position of a first communication node relative to a second communication node. In other words, the communication system may be configured to determine the relative position of the communication hardware and, thus, of the aircraft. The communication system may be configured to automatically determine the distance between the aircraft. For improving the accuracy of the determination of the position, a plurality of communication nodes may be provided in each of the aircraft.

An aspect of the communication system is that the computer program product includes further sets of instructions allowing a secure transfer of data to an aircraft control domain system from one of the aircraft to the other aircraft. A secure transfer of data may be realized by unique certificates and/or by confirmation of acceptance of the intended communication as a necessary step. It may be noted that an acceptance for the establishing of a communication link may be provided by the pilot or even by the ground control.

The communication system according to an embodiment utilizes ultra wide band (UWB) technology and/or a cellular network like 5G. It will be understood that the mentioned technologies are only examples and that future communication technologies may also be used for the purposes addressed herein. An aspect of the utilized technology may be seen as being only suitable within a short range. As mentioned above, the range in which the proposed communication may be established encompasses a distance up to 1000 meters but preferably less than 1000 meters, e.g. 500 meters, 200 meters or only 100 meters. The short range provides a further security aspect, namely that it can be ensured that the communication link will be established between predetermined aircraft.

The communication link may be configured to transfer human to machine and/or machine to machine communication. For example, the communication link may be configured to transfer commands for adjusting parameters of the auto pilot system.

A method of secure communication between two flying aircraft in accordance with the disclosure comprises, in general, the steps of activating the communication system of a first one of the aircraft, detecting the activated communication system by means of a communication system at the second one of the aircraft, determining a distance between the aircraft, and establishing, when the distance between the aircraft is within a short range, a communication link between the communication systems of the first and second aircraft.

According to an embodiment, a verification must be performed before the communication link will be established. The communication link may be established based on a security protocol. As soon as a communication link is established between the aircraft, human to machine and/or machine to machine commands can be transferred from one of the aircraft to the other one of the aircraft, for example, for controlling flight operation of the other one of the aircraft.

When considering the communication system, it is noted that a processing unit may be realized by only one processor performing all the steps of the process, or by a group or a plurality of processors, which need not be located at the same place. For example, a processing unit may be divided into a first sub-processor that controls interactions with the user, including a monitor for visualizing data, and a second sub-processor (possibly located elsewhere) that performs all computations including, for example, the determination of the position and distance of an aircraft.

A computer program product as described herein may preferably be loaded into the random-access memory of a data processor. The data processor or processing unit of a system according to an embodiment may thus be equipped to carry out at least a part of the described process. Further, the disclosure may relate to a computer-readable medium on which the disclosed computer program product may be stored. However, the computer program product may also be presented over a network like the World Wide Web and can be downloaded into the random-access memory of the data processor of an aircraft from such a network.

It has to be noted that embodiments are described with reference to different subject-matters. In particular, some embodiments are described with reference to methodtype claims (computer program product) whereas other embodiments are described with reference to apparatus-type claims (system/device). However, a person skilled in the art will gather from the above and the following description that, unless otherwise specified, any combination of features belonging to one type of subject-matter as well as any combination between features relating to different subject-matters is considered to be disclosed herein.

The aspects defined above and further aspects, features and advantages of the present invention can also be derived from the examples of the embodiments to be described hereinafter and are explained with reference to examples of embodiments also shown in the figures, but to which the invention is not limited.

### BRIEF DESCRIPTION OF THE DRAWINGS

Exemplary embodiments will be described in the following with reference to the following drawings:
Fig. 1 schematically shows two aircraft utilizing a communication system in accordance with the disclosure.

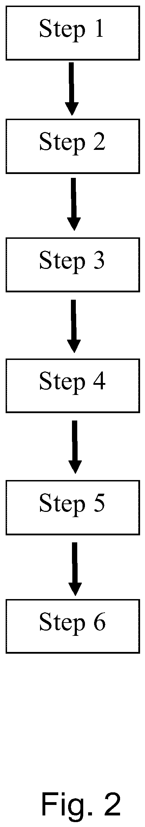

Fig. 2 is a workflow of an exemplary method.

### DETAILED DESCRIPTION OF EMBODIMENTS

Certain embodiments will now be described in greater details with reference to the accompanying drawings. The matters defined in the description, such as detailed construction and elements, are provided to assist in a comprehensive understanding of the exemplary embodiments. Also, well-known functions or constructions are not described in detail since they would obscure the embodiments with unnecessary detail. Moreover, expressions such as "at least one of", when preceding a list of elements, modify the entire list of elements and do not modify the individual elements of the list.

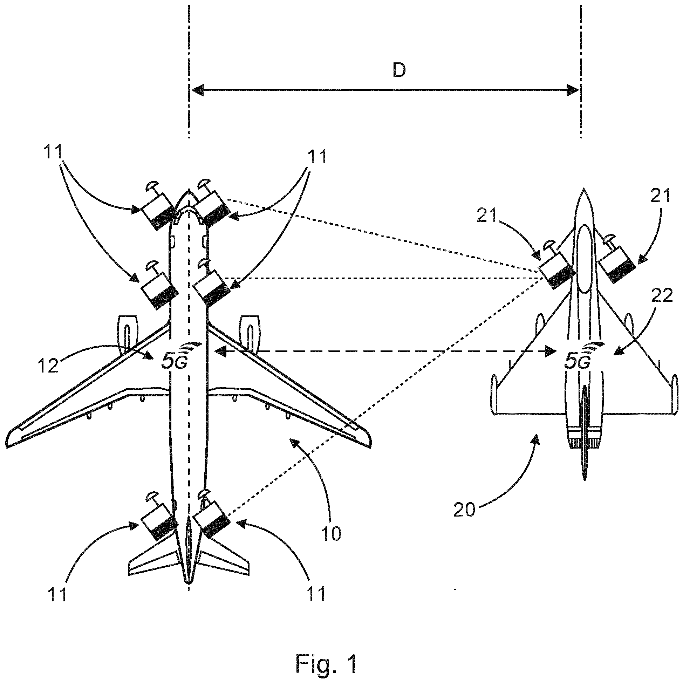

Figure 1 shows two aircraft. Here, the aircraft 10 on the left is a passenger aircraft and the aircraft 20 on the right is a military aircraft. The passenger aircraft 10 is provided with a plurality of communication nodes 11 as well as with hardware 12 allowing for a communication under 5G standard. Comparably, the military aircraft 20 comprises communication nodes 21 and hardware 22 for a parallel 5G communication. By dotted lines, communication links are visualized in figure 1 between the communication nodes 11 and 21 as well as between the hardware 12 and 22. Finally, a distance D is indicated in figure 1 between the respective longitudinal axes of the aircraft.

In the example of figure 1, a proposed short range secure communication system is composed of equipment 11, 21 to perform precise localization and communication and/or additional communication 12, 22. The localization system on board of the aircraft is based on a fixed infrastructure of communication nodes 11, 21 which function as anchor nodes. To enable higher precision and direct line-of-sight between the communication nodes of, e.g., the military aircraft 20 and the nodes of the passenger aircraft 10, the anchor nodes 21 may be installed outside on both left and right sides of the aircraft 20. The localization system is used to precisely confirm that the military aircraft 20 is within required distance D. It may be noted that the exact distance should take into account the safe horizontal separation between the aircraft. The distance D, in turn, enables the secure communication system between the aircraft. The technologies used for the communication can be either the system including the nodes 11, 21 or the 5G sidelink 12, 22. The 5G sidelink is a communication paradigm in which cellular devices are able to communicate without relaying their data via the network enabling direct device to device (d2d) or vehicle to vehicle communication. That means aircraft could create their own ad hoc network without the need for radio access network infrastructure as an intermediary. When the communication link is established, the military aircraft 20 can securely deliver mission commands to the passenger aircraft 10 or read the value of internal sensors. Both the UWB system and the 5G sidelink technology can deliver less than 10ms communication delay which is required for remote vehicle control.

The security and the trust in the proposed system is based on the following pillars. Firstly, physical security: the localization system used to enable the communication system, has a short range communication capability and works within the aviation separation standards. No aircraft is usually allowed to be present within this range. The exception here is an escort aircraft sent to establish the reason for lost communication from ATC to the aircraft.

If the controlled aircraft pilot(s) is(are) capable of flying the aircraft (i.e. the sole problem of lost communication with ATC is technical problem), they can disable the remote control from the in-command aircraft.

Use of traditional cryptography and security techniques employing public key infrastructure (PKI) and digital certificates to verify the identity of the aircraft in-command, before granting the access to the ACD system. This step addresses the possibility that a passenger onboard of the aircraft is equipped with a special device and is trying to gain access to the ACD system via spoofing its position.

In the following, a method is described illustrating steps for establishing a communication link between aircraft in flight. For example, in case the communication between an aircraft and air traffic control (ATC) is lost, the aircraft of interest may be escorted by a military aircraft in order to establish visual contact with its pilots.

In step 1, if no visual contact can be established with the left aircraft, a person/pilot on the military aircraft 20 starts the process to establish a secure communication with the passenger aircraft 10.

In step 2, at least one communication node 21 is started in broadcast mode, i.e. it is announcing its presence.

In step 3, the short range communication system on the passenger aircraft 10 detects the presence of a signal from the communication node 21 and starts the localization process. It consists of data exchange between the nodes 11, 21 on both aircraft 10, 20. Once the accurate positioning is established and is within the predefined security range, the passenger aircraft 10 sends a message to the military aircraft 20 to switch to communication mode.

In step 4, once the communication link is set up, traditional cryptography and security techniques are used, such as digital certificates for authentication, to verify the identity of the military aircraft.

In step 5, the passenger aircraft 10 enables the link between the ACD systems and the communication link.

Finally, in step 6, the aircraft are in communication mode using either the UWB system or optionally the 5G sidelink system, and the military aircraft 20 is sending control commands to the passenger aircraft 10. The commands can range from providing input to the autopilot, direct stick control or follow-me.

While the invention has been illustrated and described in detail in the drawings and foregoing description, such illustration and description are to be considered illustrative or exemplary and not restrictive. The invention is not limited to the disclosed embodiments. Other variations to the disclosed embodiments can be understood and effected by those skilled in the art in practicing a claimed invention, from a study of the drawings, the disclosure, and the dependent claims.

In the claims, the word "comprising" does not exclude other elements or steps, and the indefinite article "a" or "an" does not exclude a plurality. A single processor or other unit may fulfil the functions of several items recited in the claims. The mere fact that certain measures are recited in mutually different dependent claims does not indicate that a combination of these measures cannot be used to advantage. Any reference signs in the claims should not be construed as limiting the scope.

## Claims

1. A communication system for secure communication between a first flying aircraft (10) and a second flying aircraft (20), the communication system comprising a first communication node (11) and a first processing unit provided in the first aircraft (10) and a second communication node (21) and a second processing unit provided in the second aircraft (20), the communication system further comprising a computer program product including sets of instructions, wherein the computer program product is configured, when executed on the first processing unit and on the second processing unit, to cause the communication system to establish a communication link between the flying aircraft, when a distance (D) between the flying aircraft is less than 1000 meters.

2. The communication system of claim 1, wherein the computer program product is further configured to cause the communication system to determine the position of the first communication node (11) relative to the second communication node (21).

3. The communication system of any one of claims 1 and 2, wherein the computer program product includes further sets of instructions allowing a secure transfer of data to an aircraft control domain system.

4. The communication system of any one of claims 1 to 3, wherein the communication system uses ultra-wide band (UWB) technology.

5. The communication system of any one of claims 1 to 4, wherein the communication system uses a cellular network.

6. The communication system of any one of claims 1 to 5, wherein the communication link is configured to transfer human to machine and/or machine to machine communication.

7. The communication system of any one of claims 1 to 6, wherein the communication link between the flying aircraft is established, when a distance between the flying aircraft is less than 500 meters or less than 200 meters, in particular less than 100 meters.

8. The communication system of any one of claims 1 to 7, wherein the communication link is configured to transfer commands for adjusting parameters of the auto pilot system

9. A method of secure communication between two flying aircraft, the method comprising the steps of
activating at least one communication node of a communication system of a first one of the aircraft,
detecting the activated communication nodes by means of a communication node at the second one of the aircraft,
determining a distance between the aircraft,
establishing, when the distance between the aircraft is less than 1000 meters, a communication link between the communication nodes of the first and second aircraft.

10. The method of claim 9, further comprising the step of verifying that the communication link will be established.

11. The method of any one of claims 9 and 10, wherein the communication link is established based on a security protocol.

12. The method of any one of claims 9 to 11, further comprising the step of transferring human to machine and/or machine to machine commands from one of the aircraft to the other one of the aircraft for controlling flight operation of the other one of the aircraft.

13. An aircraft (10, 20) comprising a communication system for secure communication between flying aircraft, the communication system comprising a communication node (11, 12, 21, 22) and a processing unit, wherein a computer program product including sets of instructions is configured to be executed on the processing unit to cause the communication system to establish a communication link between the aircraft and another aircraft, when a distance (D) between the aircraft during flight is less than 1000 meters.
